# EUROPEAN PATENT APPLICATION

(11) **EP 0 971 534 A2**
(43) Date of publication of application: **12.01.2000**
(21) Application number: 99111672.4
(22) Date of filing: 16.06.1999
(51) Int. Cl.: H04N 5/243, H04N 5/235

(54) **Automatic level control unit of camera**

(30) Priority: 08.07.1998 JP 19348598
(71) Applicant: KABUSHIKI KAISHA TOSHIBA, Kawasaki-shi, Kanagawa-ken (JP)
(72) Inventor: Yamauchi, Himio, 1-1 Shibaura 1-chome Minato-ku Tokyo (JP)
(74) Representative: Henkel, Feiler, Hänzel

(57) **Abstract**

To provide an automatic level control unit of a camera that, even in the case of an area sensor that is not able to maintain simultaneity in one screen being employed, with a small size circuit, can prevent flicker of a fluorescent lamp from occurring, and implement a smooth level control of an automatic level control. In an automatic level control of a camera that controls an electronic shutter speed and a gain of an amplifier to be a prescribed output level by calculating the electronic shutter speed and the gain of an amplifier from the output level, when an object illuminance becomes low and the electronic shutter speed becomes lower than 1/(on/off frequency of a light source) second, the possible electronic shutter speed is restricted to integer times of 1/(on/off frequency of a light source) second, and at that time, a more finer level control than a level control range that the electronic shutter speed can control by integer times of 1/(on/off frequency of a light source) second is implemented by controlling the gain of the amplifier.

## Description

The present invention relates to an automatic level control unit of a camera that is suitably applicable mainly for a video camera.

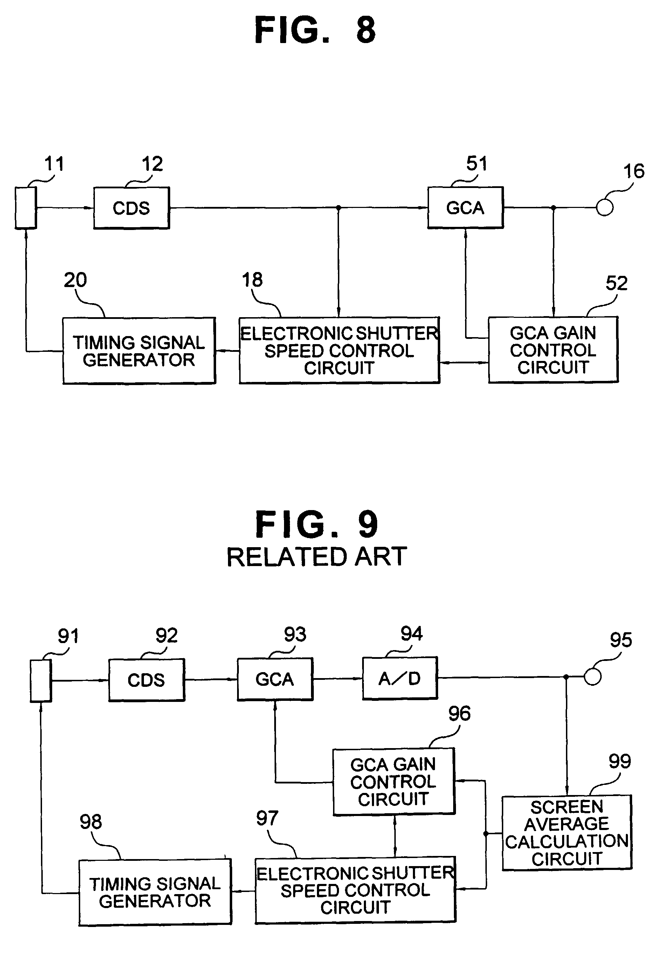

Fig. 9 shows an example of a constitution of an existing automatic level control unit of a camera. An analog video signal that is pick up from an area sensor 91 is made noise-free by a CDS (correlation double sampling circuit) 92 and, thereafter, input in a GCA (gain control amplifier) 93, to amplify. This signal is input in an A/D converter 94 to convert to a digital video signal. A digital signal output 95 is fed from the A/D converter 94 to a camera signal processor of a next stage that is not shown in the figure, to carry out desired signal processing.

The signal output 95 is input in a screen average calculation circuit 99, and the calculated result is input to an electronic shutter speed control circuit 97 and a GCA gain control circuit 96, respectively. The electronic shutter speed control circuit 97 and the GCA gain control circuit 96 determine a combination of the values of an electronic shutter speed and a GCA gain. According to the value, the electronic shutter speed control circuit 97 controls a timing signal generator 98 and an exposure time of the area sensor 91, and the GCA gain control circuit 96 controls a gain of the GCA 93.

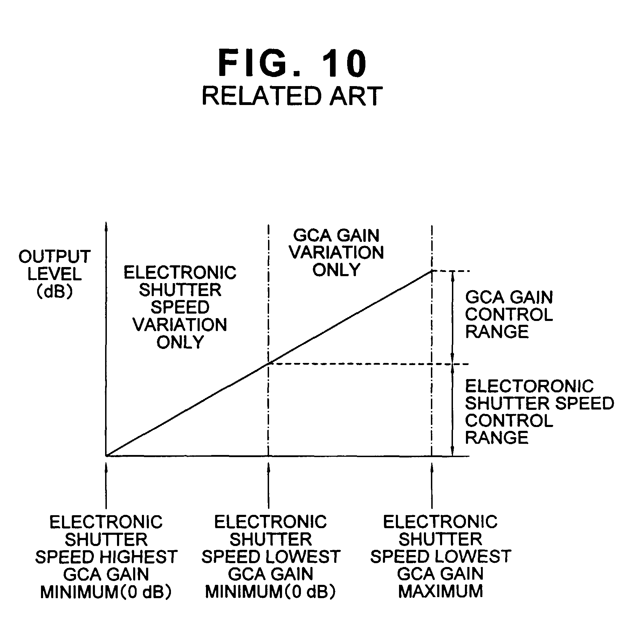

An automatic level control of the unit will be described with reference to Fig. 10. First, when an illuminance of an object is high, so at the highest of an electronic shutter speed and at the minimum of gain of the GCA 93, the output is assumed to be at a prescribed level. There, when the illuminance of the object gets low, the output level becomes lower than the prescribed level. At that time, the electronic shutter speed gets low so that the output level goes up to the prescribed level. If the output level is still lower than the prescribed level at the lowest shutter speed, the gain of the GCA 93 is raised so that the output level becomes the prescribed level.

In this unit, to the flicker of a fluorescent lamp, a separate compensating circuit is necessary. In addition, when an area sensor can not maintain simultaneity in one screen, this flicker compensating circuit becomes a complicated one. In addition, when an output level control range that the electronic shutter speed can control is coarse, the output level can not be controlled smoothly.

An object of the present invention is to provide an automatic level control unit of a camera. The unit, even when an area sensor can not maintain simultaneity in one screen, with a small size circuit, can prevent flicker of a fluorescent lamp from occurring, and enables to adjust smoothly its output level.

To accomplish the aforementioned object, an automatic level control unit of a camera of the present invention calculates and controls, by using an output level, an electronic shutter speed and a gain of an amplifier thereat the output becomes a prescribed level. In this automatic level control unit, when an object illuminance becomes low and the electronic shutter speed is lower than 1/(on/off frequency of light source) second, possible shutter speeds are restricted to integer times of the 1/(on/off frequency of light source) second. At that time, by use of the gain control of the amplifier, the output level can be controlled with a more fine level control width than that by the shutter speed control of the integer times the 1/(on/off frequency of light source) second.

Further, an automatic level control unit of a camera controls itself by calculating, from its output level, an electronic shutter speed and a gain of an amplifier so that the output level becomes a prescribed level. In this automatic level control unit, when an object illuminance is high and the electronic shutter speed is higher than a certain arbitrary speed, possible shutter speeds are restricted to integer times of the certain arbitrary shutter speed. At that time, by use of the gain control of the amplifier, the output level can be controlled with a more fine level control width than that by the shutter speed control of the integer times the certain arbitrary shutter speed.

Thus, even in the case of an area sensor that can not maintain simultaneity in one screen being employed, with a small size circuit, the flicker of fluorescent lamps can be prevented from occurring and at the same time the automatic output level control can be implemented smoothly.
Fig. 1 is a diagram showing a circuit constitution for explaining a first embodiment of the present invention.
Fig. 2 is a diagram for explaining a first concrete example of an automatic level control shown in Fig. 1.
Fig. 3 is a diagram for explaining a second concrete example of an automatic level control shown in Fig. 1.
Fig. 4 is a diagram showing a circuit constitution for explaining a second embodiment of the present invention.
Fig. 5 is a diagram showing a circuit constitution for explaining a third embodiment of the present invention.
Fig. 6 is a diagram for explaining a first concrete example of an automatic level control shown in Fig. 5.
Fig. 7 is a diagram for explaining a second concrete example of an automatic level control shown in Fig. 5.
Fig. 8 is a diagram showing a circuit constitution for explaining a fourth embodiment of the present invention.
Fig. 9 is a diagram showing a circuit constitution of an existing automatic level control unit of a camera.
Fig. 10 is a diagram for explaining the automatic level control shown in Fig. 9.

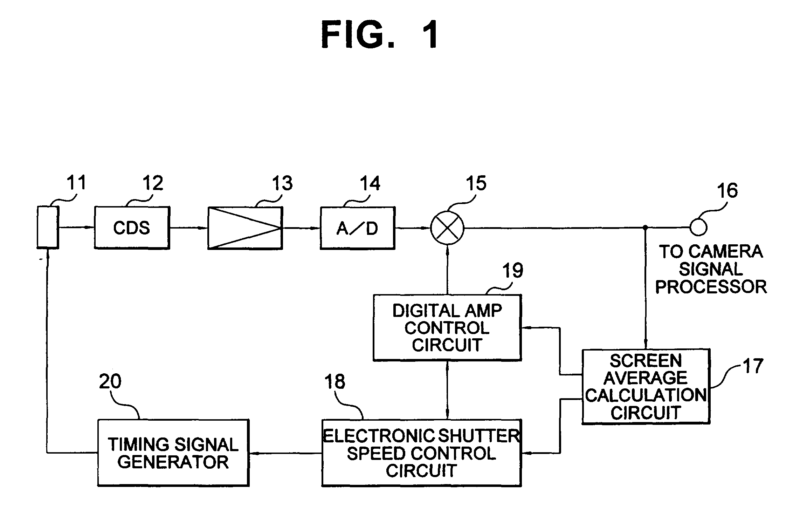

In the following, the present embodiments will be described in detail with reference to the drawings. Fig. 1 is a diagram showing a circuit constitution for explaining a first embodiment of an automatic level control unit of the present invention.

In Fig. 1, an analog video signal picked up with an area sensor 11, after removal of noise by use of a CDS 12, is amplified by a definite factor by an analog amplifier 13. A signal outputted from the analog amplifier 13 is converted into a digital signal through an A/D converter 14, after the amplification of the digital signal by a digital amplifier 15, is sent out from an output 16 to a camera signal processor of the next stage that is not shown in the figure.

For the output 16 of the digital amplifier 15 to be a prescribed level, the output 16 of the digital amplifier 15 is input in an screen average calculation circuit 17. The result calculated by the screen average calculation circuit 17 is input in an electronic shutter speed control circuit 18 and a digital amplifier control circuit 19 that controls the digital amplifier 15, respectively. The electronic shutter speed control circuit 18 and the digital amplifier control circuit 19 determine a combination of an electronic shutter speed and a gain of the digital amplifier. With these values, the timing signal generator 20 controls an exposure time of the area sensor 11, and the digital amplifier control circuit 19 controls the amplification factor of the digital amplifier 15.

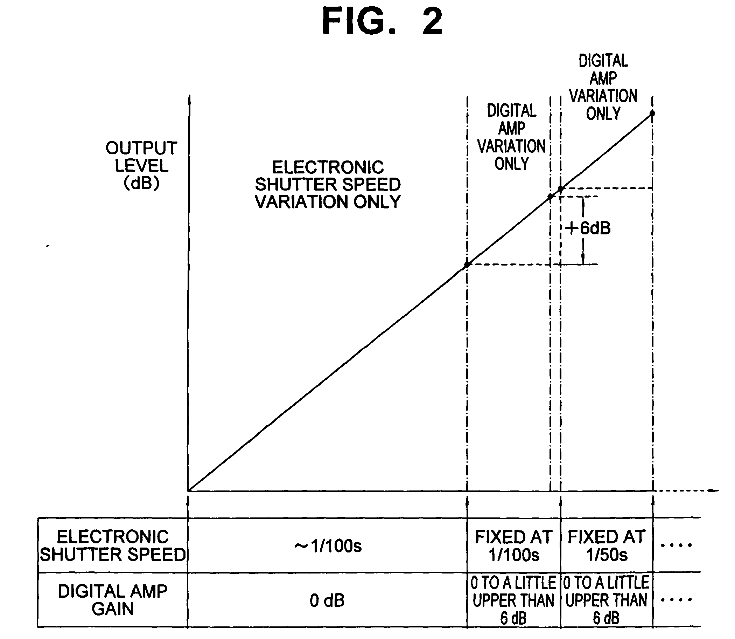

Next, a first concrete example of an automatic level control of Fig. 1 is described with Fig. 2. A frame frequency of a camera is designated to 30 frames/s, and an on/off frequency of a light source is designated to 1/100 s. The electronic shutter speed control circuit 18, in the case of the electronic shutter speed being lower than 1/100 s due to a low object illuminance, restricts the possible shutter speed to 1/50 s. At this time, the digital amplifier control circuit 19 restricts a gain control range of the digital amplifier 15 to from +0 dB to a little upper +6 dB.

First, when an illuminance of an object is high, at the highest of an electronic shutter speed and at the minimum gain (+0 dB) of the digital amplifier 15, the output is assumed to be a prescribed level. Then, when the illuminance of the object gets low, the output level becomes lower than the prescribed level. At that time, the electronic shutter speed gets low to 1/100 s so that the output level goes up. If the output level at 1/100 s is still lower than the prescribed level, the gain of the digital amplifier 15 is raised while maintaining the electronic shutter speed at 1/100 s. At the time when the gain of the digital amplifier 15 becomes the maximum (a little upper +6 dB), if the output level is still lower than the prescribed level, the electronic shutter speed is set at 1/50 s and the gain of the digital amplifier 15 is set at the minimum (+0 dB). When the output is still lower than the prescribed level, with the electronic shutter speed maintained at 1/50 s, the gain of the digital amplifier 15 is raised up to the maximum (a little upper +6 dB).

Under a fluorescent lamp that generates flicker, the shutter speed becomes low due to the low object illuminance. When implementing like this, while implementing the smooth level control, a shutter speed that is not liable to generate flicker during the low shutter speed can be selected, resulting in suppression of its influence.

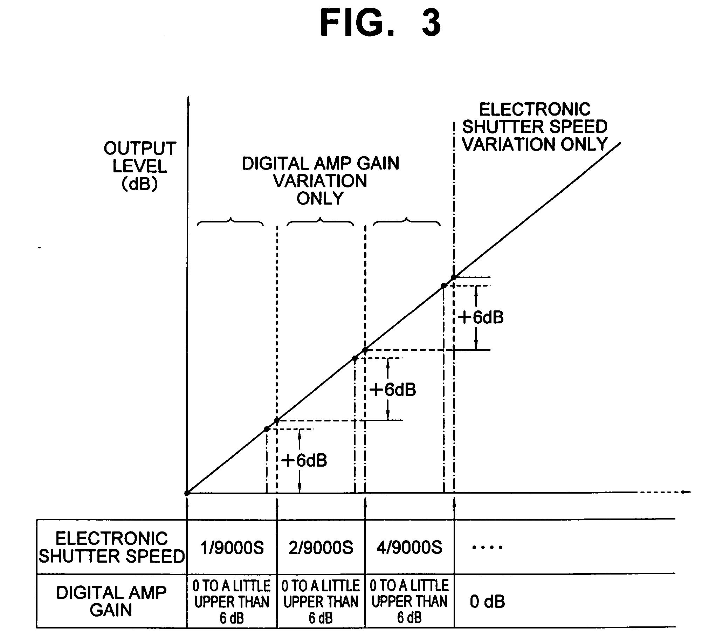

Further, with reference to Fig. 3, a second concrete example of the automatic level control of Fig. 1 will be described. This example enables a smooth level control at the high electronic shutter speed.

The frame frequency of a camera is set at 30 frames/s, and a 1V period is set at 300H. At this time, if the electronic shutter speed can be varied by a unit of 1H, the minimum shutter step is 1/9000 s. Compared with a change from 299/9000 s to 300/9000 s, the change from 1/9000 s to 2/9000 s accompanies a remarkable amount of change of exposure. Accordingly, the electronic shutter speed control circuit 18, if the object illuminance gets higher and the electronic shutter speed is higher than 8/9000 s, for instance, restricts the possible electronic shutter speeds to 1/9000 s, 2/9000 s, and 4/9000 s. In addition, in the digital amplifier control circuit 19, the gain control of the digital amplifier 15 is restricted to in the range of from +0 dB to a little upper +6 dB.

First, an object illuminance is high, and at the points of an electronic shutter speed of the highest (1/9000 s) and a gain of the digital amplifier 15 of the minimum (+0 dB), the output is assumed to be a prescribed level. There, if the object illuminance becomes low this time, the output level gets lower than the prescribed level. Then, with the electronic shutter speed at 1/9000 s, the gain of the digital amplifier 15 is raised. Even when the gain of the digital amplifier 15 becomes the maximum (a little upper +6 dB), if the output is still lower than the prescribed level, the electronic shutter speed is raised to 2/9000 s and the gain of the digital amplifier 15 is set at the minimum (+0 dB). If the output level is still lower than the prescribed level, with the electronic shutter speed held at 2/9000 s, the gain of the digital amplifier 15 is raised up to the maximum (a little upper +6 dB).

By implementing like this, even when the electronic shutter speed is raised to 4/9000 s and the gain of the digital amplifier is at the maximum (a little upper +6 dB), if the output is still lower than the prescribed level, with the gain of the digital amplifier 15 held at the minimum (+0 dB), the electronic shutter speed is lowered from 8/9000 s 1/9000 s by 1/9000 s.

In addition, if the first and second concrete examples are combined, the level control having the combined effect of low and high shutter speeds can be realized. At this time, at the intermediate electronic shutter speeds, due to a small level change, the electronic shutter speed control only will be enough for controlling the level.

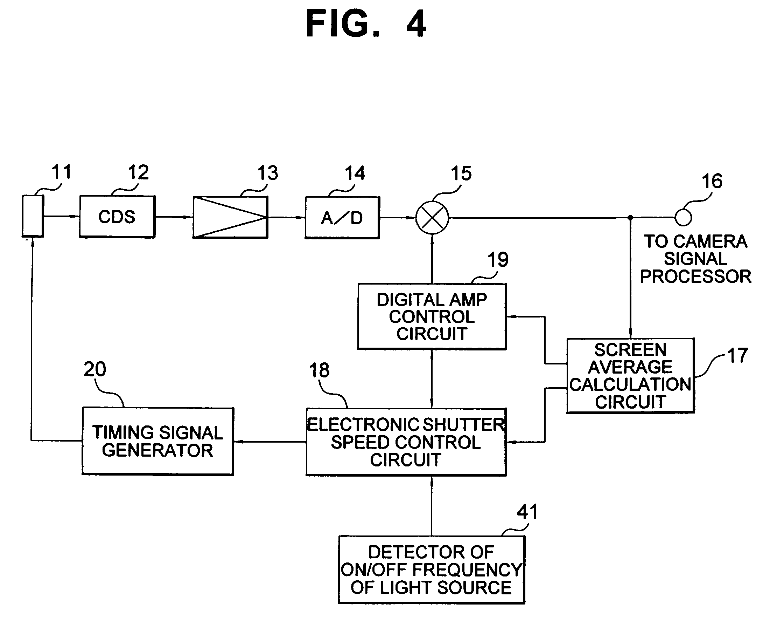

Fig. 4 is a diagram showing a circuit constitution for explaining a second embodiment of the present invention. This embodiment is obtained by adding newly only a detector 41 of an on/off frequency of a light source to Fig. 1. Accordingly, the identical constituent portions are given the same marks as Fig. 1 to describe.

Based on the on/off frequency of a light source detected by the on/off frequency detector 41, the electronic shutter speed control circuit 18, in the case of the object illuminance being low and the electronic shutter speed being lower than 1/(on/off frequency of light source) s, restricts the possible electronic shutter speeds to the integer times of the 1/(on/off frequency of light source) s. At that time, the digital amplifier control circuit 19 implements, through the gain control of the digital amplifier 15, the level control of more finer than the level control width that the electronic shutter speed of integer times the 1/(on/off frequency of light source) s can give.

In this embodiment, since the on/off frequency of the light source can be detected automatically, an inconvenience of setting the control of the electronic shutter speed according to the light source can be spared.

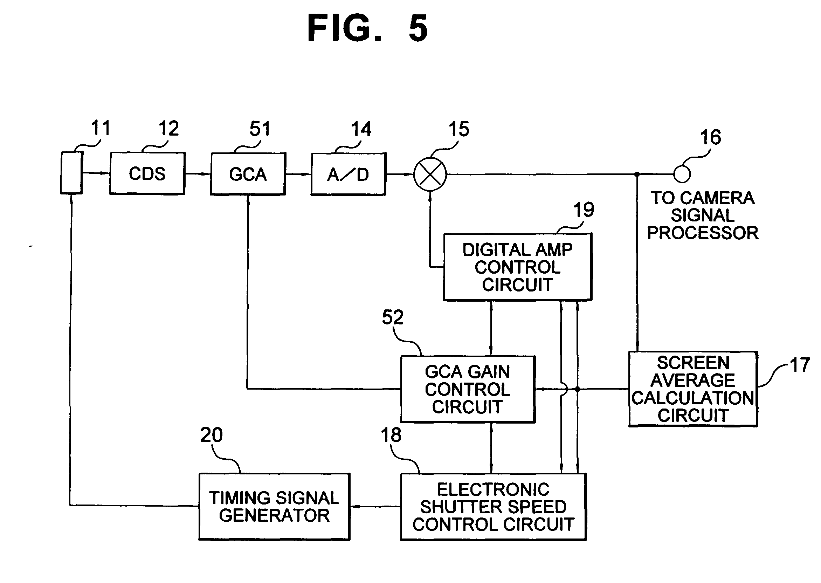

Fig. 5 is a diagram showing a circuit constitution for explaining a third embodiment of the present invention. In this embodiment, the gain of the analog signal outputted from a CDS 12 is automatically controlled with a GCA 51, thereby the level control range can be enlarged.

The video signal from an area sensor 11 is removed of noise by the CDS 12 and amplified by use of a GCA 51 to input to an A/D converter 14. The digital signal from the A/D converter 14 is amplified by a digital amplifier 15. So that the output 16 becomes a prescribed level, from the result of the screen average calculation circuit 17, by use of the electronic shutter speed control circuit 18 and the GCA gain control circuit 52 and the digital amplification control circuit 19, a combination of the values of the electronic shutter speed and the GCA gain and the digital amplifier gain is determined. According to the values, the area sensor 11 is controlled in its exposure time through the timing signal generator 20, and the amplification factors of the GCA 51 and the digital amplifier 15 are controlled.

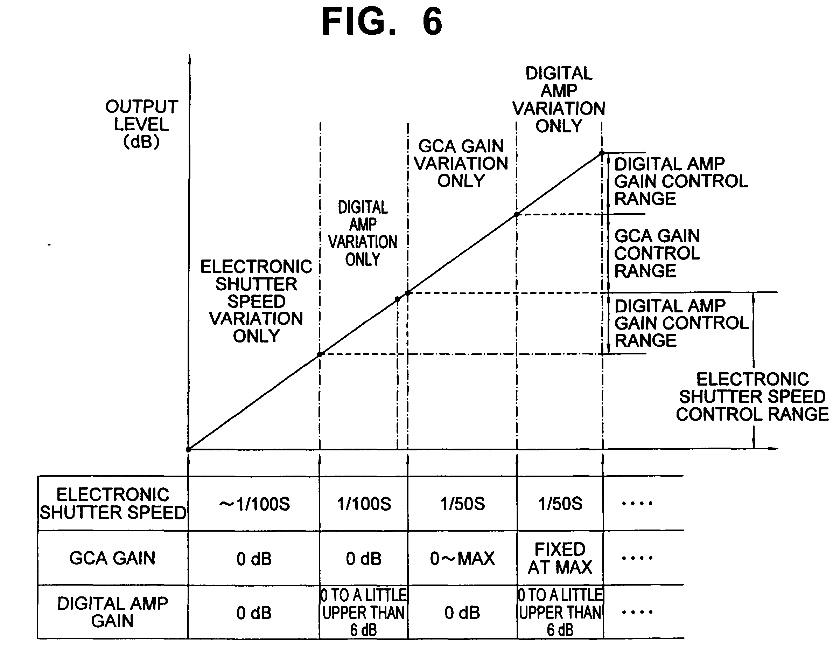

Next, with reference to Fig. 6, a first concrete example of an automatic level control of Fig. 5 is described. A frame frequency of a camera is designated at 30 frames/s, and an on/off frequency of a light source is designated at 1/100 s. The electronic shutter speed control circuit 18, in the case of the object illuminance being low and the electronic shutter speed being lower than 1/100 s, restricts the possible electronic shutter speed to 1/50 s. At this time, the digital amplifier control circuit 19 restricts a gain control range to from +0 dB to a little upper +6 dB, and the GCA gain control circuit 52 restricts the gain control range of the GCA 51 to +0 dB or more.

First, an illuminance of an object is high, so, at the highest of an electronic shutter speed and the minimum gain (+0 dB) of the digital amplifier and the minimum gain (+0 dB) of the GCA gain, the output is assumed to be a prescribed level. Then, when the illuminance of the object gets low, the output level becomes lower than the prescribed level. At that time, the electronic shutter speed gets low to 1/100 s so that the output level goes up. If the output level at 1/100 s is still lower than the prescribed level, the gain of the digital amplifier 15 is raised while maintaining the electronic shutter speed at 1/100 s. Even when the gain of the digital amplifier becomes the maximum (a little upper +6 dB), if the output level is lower than the prescribed level, the electronic shutter speed is set at 1/50 s and the gain of the digital amplifier is set at the minimum (+0 dB). When the output is still lower than the prescribed level, with the electronic shutter speed maintained at 1/50 s, the gain of the GCA 51 is raised up to the maximum. Even when the GCA gain becomes the maximum, if the output is still lower than the prescribed level, the gain of the digital amplifier is raised up to the maximum (a little upper +6 dB).

In this first embodiment of an automatic level control, at the shutter speeds of 1/100 s and 1/50 s that make flickerless, the output level is digitally controlled with the digital amplifier, resulting in a fine and accurate control.

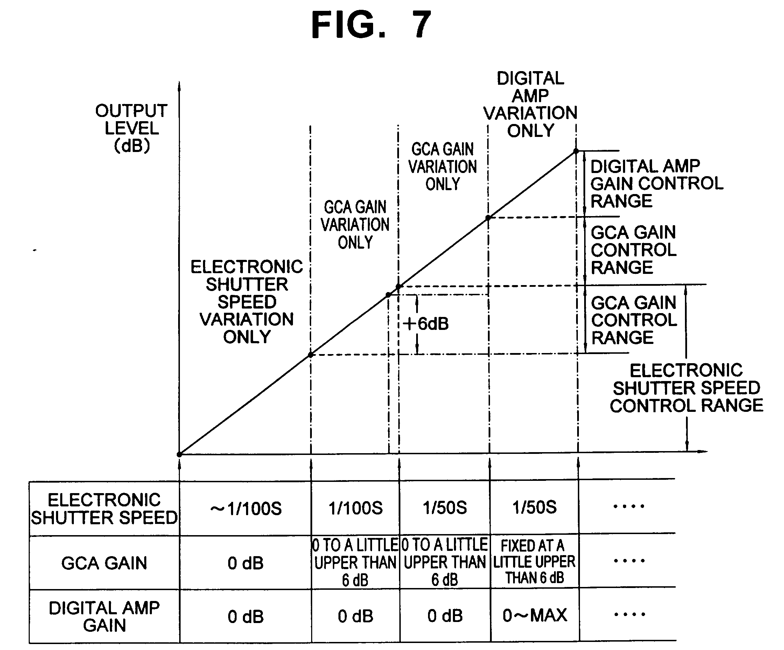

Next, with reference to Fig. 7, a second concrete example of an automatic level control of a camera of Fig. 5 will be described. The frame frequency of the camera is set at 30 frames/s, and the on/off frequency of the light source is set at 1/100 s. The electronic shutter speed control circuit 18, if the object illuminance gets lower and the electronic shutter speed is lower than 1/100 s, restricts the possible electronic shutter speed to 1/50 s. At this time, by the GCA gain control circuit 52, the gain control of the GCA 51 is restricted to in the range of from +0 dB to a little upper +6 dB, and the digital amplification control circuit 19 controls the gain of the digital amplifier 15 in the range of +0 dB or more. First, the object illuminance is high, and at the electronic shutter speed of the highest and the gain of the GCA 51 of the minimum (+0 dB) and the gain of the digital amplifier 15 of the minimum (+0 dB), the output is assumed to be the prescribed level.

There, if the object illuminance becomes low, the output level becomes lower than the prescribed level. At this time, the electronic shutter speed gets lower to 1/100 s to raise the output level, and if the output at 1/100 s is still lower than the prescribed level, with the electronic shutter speed held at 1/100 s, the gain of the GCA 51 is raised. If the output at the maximum gain of the GCA 51 (a little upper +6 dB) is still lower than the prescribed level, the electronic shutter speed is set at 1/50 s and the gain of the GCA 51 is set at the minimum (+0 dB).

If the output is still lower than the prescribed level, with the electronic shutter speed held at 1/50 s, the gain of the GCA 51 is raised up to the maximum (a little upper +6 dB). If the output is still lower than the prescribed level, the gain of the digital amplifier is raised up to the maximum.

In the second example of an automatic level control, at the shutter speeds of 1/100 s and 1/50 s that make flicker-less, the output is controlled with the analog amplifier, resulting in an improvement of S/N.

Further, with reference to the circuit constitution of Fig. 8, a fourth embodiment of the present invention will be described.

In Fig. 8, the video signal outputted from an area sensor 11, after removal of noise by use of a CDS 12, is amplified by the GCA 51 and is outputted. Based on the output of the CDS 12, the electronic shutter speed control circuit 18 controls an up-and-down of the shutter speed. For instance, at this time, in the electronic shutter speed control circuit 18, in the case of the object illuminance being low and the electronic shutter speed being lower than 1/100 s, the possible electronic shutter speed is restricted to 1/50 s. In addition, in general, the gain of the GCA 51 is fixed at a certain initial value (for instance, +0 dB), and only when the electronic shutter speed is 1/100 s or 1/50 s, the electronic shutter speed control circuit 18 gives operation permission to the GCA gain control circuit 52.

When the illuminance of the object gets low, and the electronic shutter speed is going to shift from 1/100 s to 1/50 s, the electronic shutter speed is fixed at 1/100 s for a while. In the meantime, the gain of the GCA 51 is controlled by the GCA gain control circuit 52 based on the output 16, resulting in a finer level control of the output 16. When the gain of the GCA 51 becomes the maximum (for instance, a little upper +6 dB), for the first time, the GCA gain control circuit 52 gives a permission to shift the electronic shutter speed to 1/50 s to the electronic shutter speed control circuit 18. Thereby, the electronic shutter speed becomes 1/50 s and the gain of the GCA 51 gets back once to the initial value (for instance, +0 dB). There, with the electronic shutter speed held at 1/50 s, the gain of the GCA 51 is controlled through the GCA gain control circuit 52, resulting in a finer level control of the output 16.

In this embodiment, the automatic level control of a camera is comprised totally by implementation of analog processing.

## Claims

1. An automatic level control unit of a camera that calculates an electronic shutter speed and a gain of an amplifier from an output level so that a prescribed output level is obtained after level control:
wherein the electronic shutter speed is controlled by step adjustment, and the output level of the step after control of the electronic shutter speed is compensated by fine level control of the amplifier, thereby the output level is controlled smoothly.

2. An automatic level control unit of a camera that calculates an electronic shutter speed and a gain of an amplifier from an output level so that a prescribed output level is obtained after level control:
wherein when an object illuminance becomes low and the electronic shutter speed becomes slower than 1/(on/off frequency of a light source) second, the possible electronic shutter speed is restricted to integer times of 1/(on/off frequency of a light source) second, and at that time, a more finer level control than a level control range that the electronic shutter speed can control by integer times of 1/(on/off frequency of a light source) second is implemented by controlling the gain of the amplifier.

3. The automatic level control unit of a camera as set forth in claim 2, further comprises:
a means for detecting an on/off frequency of a light source;
wherein the electronic shutter speed is controlled based on the result detected by the means.

4. An automatic level control unit of a camera that calculates an electronic shutter speed and a gain of an amplifier from an output level so that a prescribed output level is obtained after level control:
wherein when an object illuminance becomes high and the electronic shutter speed becomes higher than a certain arbitrary speed, the possible electronic shutter speed is restricted to integer times of a certain arbitrary shutter speed, and at that time, a more finer level control than a level control range that the electronic shutter speed can control by integer times of the certain arbitrary shutter speed is implemented by controlling the gain of the amplifier.

5. The automatic level control unit of a camera as set forth in any one of claim 1 through claim 4:
wherein an input of the amplifier is a digital signal after an A/D; and
further comprises;
an amplifier, an input of the amplifier being an analog signal before the A/D; and
a gain control means for controlling a gain of the amplifier of which input is the analog signal to be an output of a prescribed level when, notwithstanding an object illuminance becomes low and the electronic shutter speed is the lowest, an output level is low.

6. The automatic level control unit of a camera as set forth in any one of claim 1 through claim 4:
wherein an input of the amplifier is an analog signal before the A/D; and
further comprises;
an amplifier, an input of the amplifier being a digital signal after the A/D; and
a gain control means for controlling a gain of the amplifier of which input is the digital signal to be an output of a prescribed level when, notwithstanding an object illuminance becomes low and the electronic shutter speed is the lowest, an output level is low.
